# EUROPÄISCHE PATENTSCHRIFT

(11) **EP 2 277 002 B1**
(45) Veröffentlichungstag und Bekanntmachung des Hinweises auf die Patenterteilung: **28.01.2015**
(21) Anmeldenummer: 09735936.8
(22) Anmeldetag: 26.03.2009
(51) Int. Cl.: G01B 11/275

(54) **VERFAHREN UND VORRICHTUNG ZUR FAHRWERKSVERMESSUNG**
CHASSIS MEASUREMENT METHOD AND DEVICE
PROCÉDÉ ET DISPOSITIF DE CONTRÔLE DE LA GÉOMÉTRIE DES TRAINS ROULANTS

(30) Priorität: 23.04.2008 DE 102008001339
(43) Veröffentlichungstag der Anmeldung: 26.01.2011
(73) Patentinhaber: Robert Bosch GmbH, 70442 Stuttgart (DE)
(72) Erfinder: NOBIS, Guenter, 72622 Nuertingen (DE); ABRAHAM, Steffen, 31134 Hildesheim (DE); UFFENKAMP, Volker, 71642 Ludwigsburg (DE)
(86) Internationale Anmeldenummer: PCT/EP2009/053601
(87) Internationale Veröffentlichungsnummer: WO 2009/130103

(56) Entgegenhaltungen:
- EP-A2- 0 895 056
- WO-A-94/05969
- WO-A-03/089876
- DE-A1- 2 948 573
- DE-A1- 4 419 584
- US-A- 5 675 515
- US-A- 5 969 246

## Beschreibung

Die Erfindung bezieht sich auf die Fahrwerksvermessung, insbesondere auf ein Verfahren und eine Vorrichtung zur optischen Fahrwerksvermessung.

DE 197 57 763 und EP 104 2643 beschreiben, wie mit Hilfe von Kameras, einem Referenz-Koordinatensystem am Prüfplatz und optischen Merkmalen an den Fahrzeugrädern und an der Karosserie die Fahrachse und Rad- und Achsgeometriedaten ermittelt werden können. Beide Verfahren benötigen ein Referenz-Koordinatensystem und stützen sich auf die Messung mit binokularen (Stereo-)Bildaufnahmeeinrichtungen. Solche binokularen Bildaufnahmeeinrichtungen sind aufwendig und teuer.

US 613 47 92 beschreibt ein Achsmesssystem, das sich auf monokulare Bildaufnahmeeinrichtungen stützt. Um die dreidimensionale Information der Radstellung zu erhalten, werden an den Rädern optische Targets angebracht, auf denen sich Merkmale befinden, deren Position in einem lokalen Target-Koordinatensystem bekannt ist. Die Targets mit diesen Merkmalen sind mit hoher Präzision hergestellt und bilden ein so genanntes Passpunktsystem. Die Herstellung solcher hoch präzisen Targets ist teuer. Auch können die hoch präzisen Targets im Werkstattalltag leicht beschädigt oder deformiert werden, was zu unkontrollierbaren Messfehlern führt.

DE 44 19 584 A beschreibt ein Verfahren und eine Vorrichtung zur Fahrwerkvermessung mit monokularen Bildaufnahmeeinrichtungen. An dem Fahrzeugrad wird eine runde Meßscheibe befestigt.

Es ist eine Aufgabe der vorliegenden Erfindung, ein zuverlässiges, kostengünstiges und genaues Verfahren zur Fahrwerksvermessung zur Verfügung zustellen. Es ist eine weitere Aufgabe der Erfindung, eine Vorrichtung zur Durchführung des erfindungsgemäßen Verfahrens bereit zu stellen.

Diese Aufgabe wird von den Verfahren und den Vorrichtungen nach den unabhängigen Patentansprüchen vollständig gelöst.

Die Erfindung sieht vor, an den Rädern vorhandene oder aufgebrachte Geometriedetails mit monokularen Bildaufnahmevorrichtungen in mindestens zwei Lagen zu erfassen, wobei das Fahrzeug durch Rollen der Räder bewegt wird. Die Geometriedetails am Rad drehen sich dabei um die Drehachse des Rades. Aus den in allen aufgenommenen Bildern gemessenen 2D-Bildkoordinaten der abgebildeten Geometriedetails ergeben sich deren 3D-Koordinaten in einem lokalen Rad-Koordinatensystem, die Translations- und Rotationsvektoren der Räder des Fahrzeugs und die Drehwinkel des Rades zwischen den Lagen sowie die zur Achsvermessung erforderlichen Informationen in Form von 3D-Position des Drehzentrums und räumlichen Richtung der Drehachse. Dieser Berechnungsschritt wird nachfolgend als 3D-Rekonstruktion bezeichnet.

Nach erfolgter 3D-Rekonstruktion bilden die Positionen der Geometriedetails im Rad-Koordinatensystem ein Passpunktsystem, so dass nachfolgende Messungen bei stehendem Fahrzeug zum Beispiel zur Einstellung von Spur und Sturz bei erkannter Fehlstellung des Rades durchgeführt werden können. Die 3D-Rekonstruktion bestimmt lediglich die Form des Rad-Koordinatensystems, nicht dessen Maßstab. Jede monokulare Bildaufnahmevorrichtung berechnet sein zugehöriges Rad-Koordinatensystem mit einem lokalen Maßstab, der bei der Rekonstruktion beliebig vorgegeben wird.

Für die wichtigsten Messwerte der Achsvermessung, die im Wesentlichen auf der Berechnung von Winkeln beruhen, müssen die Maßstäbe aller Bildaufnahmevorrichtungen weder identisch noch absolut bekannt sein. Erst wenn zusätzlich metrische Messwerte zu bestimmen sind oder die Einzelspur der Hinterräder, müssen die lokalen Maßstäbe aufeinander angepasst werden. Im Folgenden wird ein für alle Bildaufnahmevorrichtungen gemeinsamer Maßstab als globaler Maßstab bezeichnet. Durch Einführung einer zusätzlichen, maßhaltigen, externen Information wird der globale Maßstab auf einen absoluten Maßstab angepasst.

Eine zusätzliche Erfassung von Geometriedetails an der Karosserie steigert die Genauigkeit der Bestimmung der Translations- und Rotationsvektoren zwischen den Lagen.

Ein erfindungsgemäßes Verfahren zur Fahrwerksvermessung umfasst die Schritte: Bereitstellen eines Fahrwerksvermessungssystems mit vier in bekannter Position zueinander angeordneten Messköpfen, von denen jeder eine monokulare Bildaufnahmevorrichtung aufweist; Erfassen von mindestens drei Geometriedetails jeweils eines Rades eines in einer Anfangslage stehenden Fahrzeugs mit jedem der vier Messköpfe; Ausführen einer Relativbewegung zwischen dem Fahrzeug einerseits und den Messköpfen andererseits von der Anfangslage in mindestens eine weitere Lage (E), wobei die relative Position der Messköpfe zueinander bekannt ist; Erfassen der mindestens drei Geometriedetails jeweils eines Rades des in der weiteren Lage stehenden Fahrzeugs mit jedem der vier Messköpfe; Bestimmung der 3D-Koordinaten der Geometriedetails im lokalen Koordinatensystem des jeweiligen Messköpfes, der Tranlationsvektoren und der Rotatiosnvektoren der Räder aus den Positionen der Geometriedetails in der Anfangslage und der Endlage und aus der Formulierung einer dreidimensionalen Bewegung eines starren Körpers zwischen den zwei Lagen unter Einführung der Drehzentren, der Drehachsen und der Drehwinkel der Räder; Bestimmen eines globalen Maßstabs für die Messköpfe durch Skalieren der Translationsvektoren der Räder, so dass die Translationsvektoren die gleiche Länge haben; und Bestimmen von Sturz, Einzel- und/oder Gesamtspur des Fahrzeugs.

Bei diesem Verfahren erfolgt die Synchronisation der Kameras über eine Messung im Stand.

Ein weiteres erfindungsgemäßes Verfahren zur Fahrwerksvermessung umfasst die Schritte:

Bereitstellen eines Fahrwerksvermessungssystems mit vier in bekannter Position zueinander angeordneten Messköpfen, von denen jeder eine monokulare Bildaufnahmevorrichtung aufweist, wobei die Bildaufname der Messköpfe zeitlich synchronisiert erfolgt; Ausführen einer Relativbewegung zwischen einem Fahrzeug einerseits und den Messköpfen andererseits mit konstanter oder nicht konstanter Geschwindigkeit, wobei die relative Position der Messköpfe zueinander bekannt ist; Erfassen von mindestens drei Geometriedetails jeweils eines Rades des Fahrzeugs während der Ausführung der Relativbewegung mit jedem der vier zueinander zeitlich synchronisierten Messköpfe in mindestens zwei Lagen des Fahrzeugs; Bestimmung der 3D-Koordinaten der Geometriedetails im lokalen Koordinatensystem des jeweiligen Messköpfes, der Tranlationsvektoren und der Rotatiosnvektoren der Räder aus den Positionen der Geometriedetails in zwei Lagen und aus der Formulierung einer dreidimensionalen Bewegung eines starren Körpers zwischen den zwei Lagen unter Einführung der Drehzentren, der Drehachsen und der Drehwinkel der Räder; Bestimmen eines gemeinsamen, globalen Maßstabs für die Messköpfe durch Skalieren der Translationsvektoren der Räder, so dass die Translationsvektoren die gleiche Länge haben; und Bestimmen von Sturz, Einzel- und/oder Gesamtspur des Fahrzeugs.

Bei diesem Verfahren wird die Geschwindigkeit nicht zwingend variiert, d. h. es kann mit konstanter oder nicht konstanter Geschwindigkeit ausgeführt werden.

Ein weiteres erfindungsgemäßes Verfahren zur Fahrwerksvermessung umfasst die Schritte:

Bereitstellen eines Fahrwerksvermessungssystems mit vier in bekannter Position zueinander angeordneten Messköpfen, von denen jeder eine monokulare Bildaufnahmevorrichtung aufweist; Ausführen einer Relativbewegung zwischen einem Fahrzeug einerseits und den Messköpfen andererseits mit nicht konstanter Geschwindigkeit, wobei die relative Position der Messköpfe zueinander bekannt ist; Erfassen von mindestens drei Geometriedetails jeweils eines Rades des Fahrzeugs während der Ausführung der Relativbewegung mit jedem der vier zueinander synchronisierten Messköpfe in mehreren Lagen des Fahrzeugs; Bestimmung der 3D-Koordinaten der Geometriedetails im lokalen Koordinatensystem des jeweiligen Messköpfes, der Tranlationsvektoren und der Rotatiosnvektoren der Räder aus den Positionen der Geometriedetails in zwei Lagen und aus der Formulierung einer dreidimensionalen Bewegung eines starren Körpers zwischen den zwei Lagen unter Einführung der Drehzentren, der Drehachsen und der Drehwinkel der Räder; Bestimmen der Bewegungsprofile der Räder aus den erfassten Bewegungen der Geometriedetails; Synchronisieren der Bewegungsprofile der Räder durch Abgleich der Bewegungsprofile bezüglich Lage, Form und Maßstab; und Bestimmen von Sturz, Einzel- und/oder Gesamtspur des Fahrzeugs.

Bei diesem Verfahren sind die Kameras nicht zwingend synchronisiert und die Geschwindigkeit ist nicht konstant. Die Synchronisation erfolgt über den Abgleich des Bewegungsprofils.

Eine erfindungsgemäße Vorrichtung weist eine Anordnung von vier in bekannter Position zueinander angeordneten Messköpfen, von denen jeder eine monokulare Bildaufnahmevorrichtung aufweist und eingerichtet ist, im Betrieb mit der Bildaufnahmevorrichtung jeweils wenigstens drei Geometriedetails jeweils eines Rades des in einer Ausgangslage und einer weiteren Lage stehenden Fahrzeugs zu erfassen; eine Auswerteinrichtung, die eingerichtet ist, im Betrieb aus der Bewegung der erfassten Geometriedetails in der Anfangslage und der Endlage und aus der Formulierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes, die Tranlationsvektoren und die Rotatiosnvektoren der Räder zu bestimmen; und durch Skalieren der Translationsvektoren der Räder einen globalen Maßstab so zu bestimmen, dass die Translationsvektoren die gleiche Länge haben, und den Sturz, Einzel- und/oder die Gesamtspur des Fahrzeugs zu bestimmten.

Eine weitere erfindungsgemäße Vorrichtung weist eine Anordnung von vier in bekannter Position zueinander angeordneten Messköpfen, von denen jeder eine monokulare Bildaufnahmevorrichtung aufweist und eingerichtet ist, dass die Bildaufnahme der Messköpfe zeitlich synchronisiert erfolgt und mit der Bildaufnahmevorrichtung im Betrieb jeweils wenigstens drei Geometriedetails jeweils eines Rades des Fahrzeugs während der Ausführung einer Bewegung des Fahrzeugs mit konstanter oder nicht konstanter Geschwindigkeit relativ zu den Messköpfen zu erfassen, undeine Auswerteinrichtung, die eingerichtet ist, im Betriebaus der Bewegung der erfassten Geometriedetails in zwei Lagen und aus der Formulierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes, die Tranlationsvektoren und die Rotatiosnvektoren der Räder zu bestimmen; durch Skalieren der Translationsvektoren der Räder einen gemeinsamen globalen Maßstabsfaktor so zu bestimmen, dass die Translationsvektoren die gleiche Länge haben, und den Sturz, Einzel- und/oder die Gesamtspur des Fahrzeugs zu bestimmten.

Eine weitere erfindungsgemäße Vorrichtung weist eine Anordnung von vier in bekannter Position zueinander angeordneten Messköpfen, von denen jeder eine monokulare Bildaufnahmevorrichtung aufweist und eingerichtet ist, im Betrieb mit der Bildaufnahmevorrichtung jeweils wenigstens drei Geometriedetails jeweils eines Rades des Fahrzeugs während der Ausführung einer Bewegung des Fahrzeugs mit nicht konstanter Geschwindigkeit relativ zu den Messköpfen zu erfassen, undeine Auswerteinrichtung, die eingerichtet ist, im Betrieb aus der Bewegung der erfassten Geometriedetails in zwei Lagen und aus der Formulierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes, die Tranlationsvektoren und die Rotatiosnvektoren der Räder zu bestimmen; die Bewegungsprofile der Räder durch Anpassen der Bewegungsprofile in Lage, Form und Maßstab zu synchronisieren, und den Sturz, Einzel- und/oder die Gesamtspur des Fahrzeugs zu bestimmen.

Die Erfindung ermöglicht somit die Fahrwerksvermessung, ohne teure und aufwendige binokulare Bildaufnahmevorrichtungen und/oder Präzisionstargets zu verwenden. Auch werden Messfehler vermieden, die sich aus der Beschädigung hochpräziser Messtargets ergeben können. Die Messung kann einfach und schnell durchgeführt werden, da eine genaue Positionierung von Radadaptern auf der Drehachse der Räder nicht erforderlich ist und auf die Vorgabe eines absoluten Maßstabes verzichtet werden kann.

In einer Ausführungsform ist wenigstens eines der Geometriedetails ein natürliches, an dem Rad vorhandenes Geometriedetail, wie z.B. die Kante einer Felge oder das Ventil des Rades. Durch das Verwenden eines natürlichen Geometriedetails können die Schritte, Messtargets anzubringen und nach der Messung wieder abzunehmen, eingespart werden, so dass die Messung schneller durchgeführt werden kann.

In einer Ausführungsform ist wenigstens eines der Geometriedetails ein auf das Rad aufgebrachtes Messtarget. Messtargets weisen einen hohen Kontrast auf und sind daher von den Bildaufnahmevorrichtungen besonders gut zu erkennen. Die Messtargets können beispielsweise mittels Magneten oder Klebefolie angebracht werden. Die Messtargets können kodiert sein, um das Verfolgen der Messtargets während der Bewegung zu vereinfachen.

Messtargets an der Karosserie erhöhen die Genauigkeit bei der Bestimmung der Translations- und Rotationsvektoren und bei der Erfassung der Lenk- und Federbewegungen des Fahrzeugs.

In einer Ausführungsform werden mehrere Messtargets auf einem gemeinsamen Träger, beispielsweise einen Radadapter, aufgebracht. Der Träger kann beispielsweise mittels eines Magneten oder Klebefolie angebracht werden, um mit nur einem Montageschritt gleichzeitig mehrere Messtargets am Rad anzubringen.

In einer Ausführungsform wird einmalig vor der Fahrzeugvermessung die Position und Ausrichtung der Messköpfe zueinander anhand von am Messplatz fixierten Referenzpunkten dem System bekannt gemacht.

In einer Ausführungsform wird kontinuierlich während der Fahrzeugvermerssung die Position und Ausrichtung der Messköpfe zueinander anhand von am Messplatz fixierten Referenzpunkten dem System bekannt gemacht.

In einer Ausführungsform wird vor und während der Fahrzeugvermessung die Position und Ausrichtung der Messköpfe zueinander mit der in EP-1184640 genannten Vorrichtung bestimmt und dem System bekannt gemacht.

In einer Ausführungsform wird das Fahrzeug zwischen den Messköpfen hindurchgefahren. So ist es nicht notwendig, die Messköpfe bewegbar auszugestalten, und die relative Position zwischen den Messköpfen kann besonders einfach und zuverlässig konstant gehalten werden.

In einer weiteren Ausführungsform sind jeweils zwei der Messköpfe so angeordnet, dass sie einander symmetrisch auf beiden Seiten des Fahrzeugs gegenüberliegen und das Fahrzeug wird parallel zur Symmetrieachse der gegenüberliegenden Messköpfen hindurchbewegt. Durch die symmetrische Anordnung der Messköpfe und die zur Symmetrieachse parallele Bewegung des Fahrzeugs zwischen den Messköpfen ist es möglich, die Einzelspur der Hinterräder des Fahrzeugs zu bestimmen, ohne dass der absolute Maßstab den Messköpfen bekannt ist. Die Einzelspur der Hinterräder kann so besonders einfach bestimmt werden.

In einer weiteren Ausführungsform wird von wenigstens einem der Messköpfe zusätzlich eine metrisch bekannte Information erfasst, um den Maßstab absolut zu bestimmen und dann zusätzlich den Radstand und die Spurweite des Fahrzeugs zu bestimmen. Durch das Bestimmen eines absoluten Maßstabs können der Radstand und die Spurweite des Fahrzeugs mit hoher Genauigkeit bestimmt werden.

In einer Ausführungsform ist die metrisch bekannte Information eine bekannte Distanz zwischen zwei Merkmalen des Fahrzeugs. Eine bekannte Distanz zwischen zwei Merkmalen des Fahrzeugs stellt auf besonders einfache Weise einen absoluten Maßstab zur Verfügung. Die Merkmale des Fahrzeugs können Merkmale der Karosserie, wie z. B. Stoßstangen oder Radkästen, Merkmale an den Rädern, wie z. B. die Felgenkante, oder auf dem Rad aufgebrachte Adapter oder Messtargets sein.

In einer Ausführungsform ist die metrisch bekannte Information eine von dem Fahrzeug zurückgelegte Distanz. Hierdurch wird das Verfahren vereinfacht.

In einer Ausführungsform wird die Geschwindigkeit des Fahrzeugs durch Geschwindigkeitssensoren gemessen und die zurückgelegte Distanz durch Integration der Geschwindigkeit über die Zeit bestimmt. Dadurch kann die von dem Fahrzeug zurückgelegte Distanz besonders einfach und zuverlässig bestimmt und ein absoluter Maßstab zur Verfügung gestellt werden.

Die Erfindung wird im Folgenden anhand der beiliegenden Figuren ausführlicher beschrieben. Dabei zeigt:
- Figur 1: die schematische Darstellung einer erfindungsgemäßen Vorrichtung zum Vermessen der Fahrwerksgeometrie eines Fahrzeugs, sowie eines Fahrzeugs in der Ausgangs- und der Endlage von oben;
- Figur 2: schematisch die 3D-Rekonstruktion einer Achsgeometrie ohne globalen Maßstab; und
- Figur 3: die Vorrichtung zum Vermessen der Fahrwerksgeometrie aus Figur 1, wobei die Fahrzeuglängsmittelebene von der Längsachse des Messplatzkoordinatensystems abweicht.

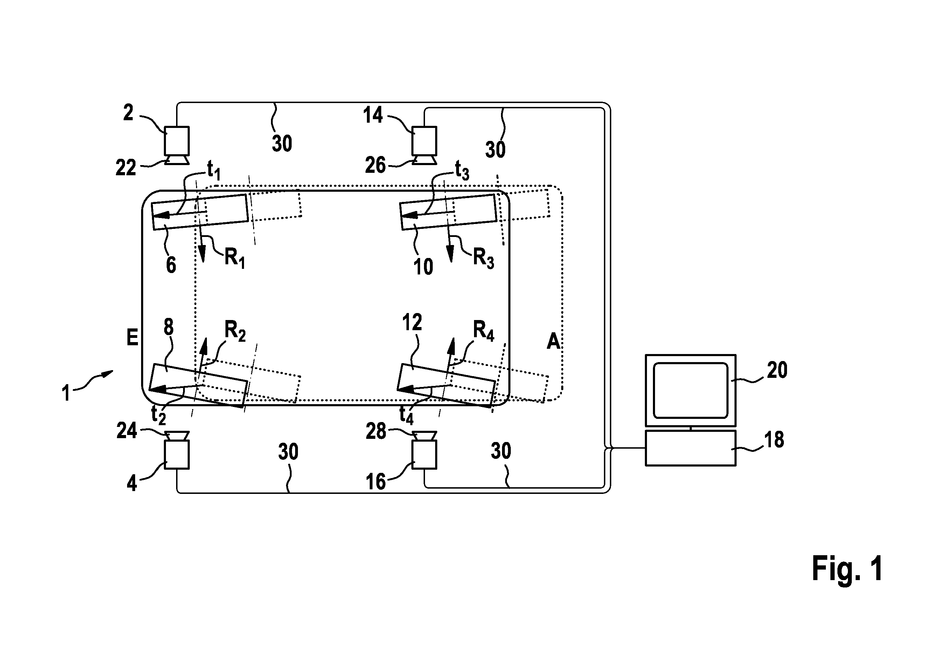

Figur 1 zeigt die schematische Darstellung einer erfindungsgemäßen Vorrichtung zum Vermessen der Fahrwerksgeometrie eines Fahrzeugs von oben.

Die Vorrichtung weist vier Messköpfe 2, 4, 14, 16 auf, die jeweils paarweise einander gegenüberliegend auf beiden Seiten eines Fahrzeugs 1 angeordnet sind. Die Messköpfe 2, 4, 14, 16 weisen jeweils auf ihrer dem Fahrzeug 1 zugewandten Seite je eine monokulare Bildaufnahmeeinrichtung 22, 24, 26, 28 auf, die z. B. als Kamera ausgestaltet ist. Die Position der Messköpfe 2, 4, 14, 16 im Koordinatensystem des Messplatzes ist bekannt und wird während der Messung nicht verändert.

Das Fahrzeug 1 weist vier Räder 6, 8, 10, 12 auf und ist so zwischen den Messköpfen 2, 4, 14, 16 angeordnet, dass jeweils eines der Räder 6, 8, 10, 12 im Blickfeld einer der Bildaufnahmevorrichtungen 22, 24, 26, 28 positioniert ist. Die Messköpfe 2, 4, 14, 16 sind über Datenleitungen 30 mit einer Auswerteinrichtung 18 zum Auswerten der von den Messköpfen 2, 4, 14, 16 aufgenommenen und ermittelten Daten verbunden. Die Auswerteinrichtung 18 ist mit einer Anzeige 20 zum Anzeigen der Ergebnisse der Messung verbunden. Weiterhin ist die Auswerteinrichtung 18 mit einer in der Figur 1 nicht gezeigten Eingabevorrichtung, z.B. einer Tastatur, zum Steuern der Auswerteinrichtung 18 versehen.

In der Figur 1 ist das Fahrzeug 1 in einer mit gestrichelten Linien dargestellten Anfangslage A und einer mit durchgezogenen Linien dargestellten Endlage E dargestellt. Die Endlage E befindet sich in horizontaler Richtung links neben der Anfangslage A.

Zur Durchführung der Messung wird zunächst jedes der Räder 6, 8, 10, 12 in der Anfangslage A des Fahrzeugs 1 von jeweils einer der Bildaufnahmevorrichtungen 22, 24, 26, 28 erfasst und die Position von mindestens drei Geometriedetails des jeweiligen Rades 6, 8, 10, 12 in den Bildern erfasst.
Das Fahrzeug 1 wird in die Endlage E bewegt und die Position der Geometriedetails in den Bildern erneut bestimmt.

Aus den Positionen der Geometriedetails in den Bildern in der Anfangslage A des Fahrzeugs 1 und der Endlage E des Fahrzeugs 1 und der Formulierung einer dreidimensionalen Bewegung eines starren Körpers zwischen den zwei Lagen unter Einführung der Drehzentren, der Drehachsen und der Drehwinkel der Räder können nun die 3D-Koordinaten der Geometriedetails im lokalen Koordinatensystem des jeweiligen Messkopfes 2, 4, 14, 16, die Translationsvektoren t₁, t₂, t₃ und t₄ und die Rotationsvektoren R₁, R₂, R₃ und R₄ der Räder 6, 8, 10, 12 bestimmt werden. Dies kann entweder durch eine Logik im jeweiligen Messkopf 2, 4, 14, 16 oder in der Auswerteinrichtung 18 erfolgen.

Die Geometriedetails können natürliche Geometriedetails des Rades 6, 8, 10, 12, wie z. B. eine Felgenkante, ein Ventil, ein Design-Element oder Schriftzeichen oder ein auf dem Rad 6, 8, 10, 12 aufgebrachtes Messtarget sein. Durch das Verwenden natürlicher Geometriedetails kann der Schritt des Aufbringens und späteren Abnehmens von Messtargets eingespart werden, so dass die Messung schneller durchgeführt werden kann. Andererseits weisen Messtargets einen hohen Kontrast auf und sind daher von den Bildaufnahmevorrichtungen 22, 24, 26, 28 besonders gut zu erkennen. Messtargets ermöglichen so insbesondere auch bei schlechten Lichtverhältnissen eine genaue Fahrwerksvermessung.

Da es sich bei den Bildaufnahmevorrichtungen 22, 24, 26, 28 um monokulare Bildaufnahmevorrichtungen 22, 24, 26, 28 handelt, kann die Position der Geometriedetails im dreidimensionalen Koordinatensystem des jeweiligen Messkopfes 2, 4, 14, 16 nur bis auf einen unbekannten Maßstabsfaktor zwischen lokalem und absolutem Maßstab bestimmt werden, beziehungsweise zwischen globalem und absolutem Maßstab, wenn die lokalen Maßstäbe aneinander angepasst wurden.

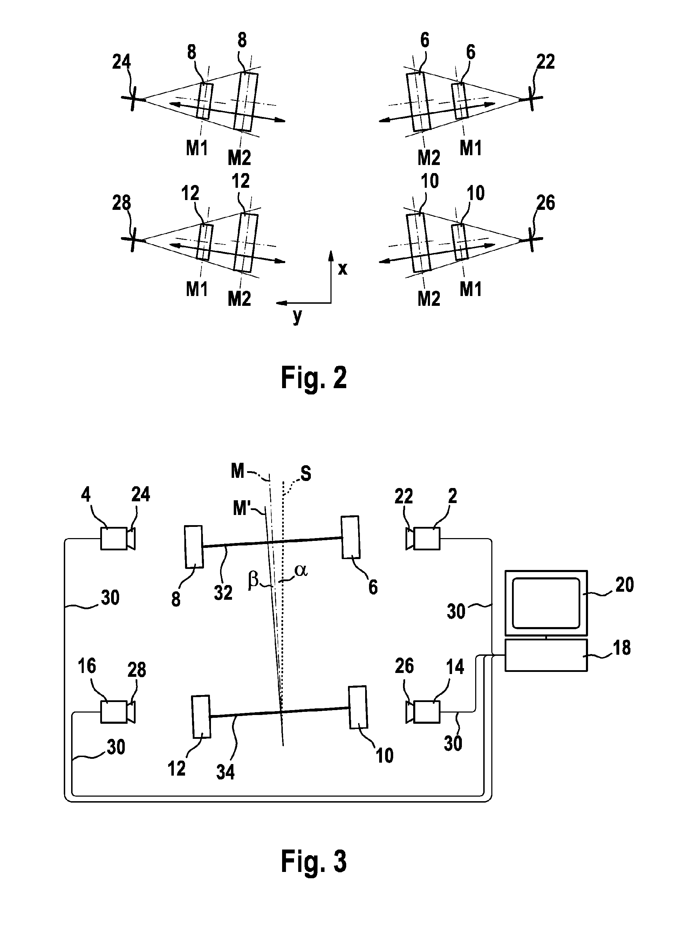

Figur 2 veranschaulicht diese Maßstabsunsicherheit beispielhaft. In Figur 2 ist eine 3D-Rekonstruktion der Räder 6, 8, 10, 12 für zwei beispielhafte Maßstäbe M1 und M2 dargestellt. Aus der Figur 2 wird deutlich, dass eine Änderung des Maßstabs zu einer Skalierung aller Streckenlängen um den gleichen Faktor führt. Die Abbildung eines großen, entfernten Objektes, hier der Räder 6, 8, 10, 12 mit dem Maßstab M2, ist identisch mit den maßstäblich verkleinerten Räder 6, 8, 10, 12 mit dem Maßstab M1, die sich in geringerer Entfernung von der jeweiligen Bildaufnahmevorrichtung 22, 24, 26, 28 befinden.

Da das Fahrzeug 1 für diese Messung als starrer Körper anzusehen ist, verändert sich die relative Position der Räder 6, 8, 10, 12 zueinander nicht, wenn das Fahrzeug 1 von der Anfangslage A in die Endlage E bewegt wird. Die Translationsvektoren t₁, t₂, t₃ und t₄ der Räder 6, 8, 10, 12 müssen daher im globalen Koordinatensystem die gleiche Länge aufweisen. Daher können die vier lokalen Maßstäbe der Messköpfe 2, 4, 14, 16 auf einen gemeinsamen, globalen Maßstab reduziert werden, indem die Translationsvektoren t₁, t₂, t₃ und t₄, so skaliert werden, dass sie die gleiche Länge aufweisen.

Zum Skalieren der Translationsvektoren t₁, t₂, t₃ und t₄ und zum Anpassen auf einen gemeinsamen Maßstab muss die Erfassung aller vier Räder 6, 8, 10, 12 durch die Bildaufnahmevorrichtungen 22, 24, 26, 28 der Messköpfe 2, 4, 14,16 zeitlich synchronisiert werden, damit die vier Räder 6, 8, 10, 12 jeweils in der gleichen Lage des Fahrzeugs 1 erfasst werden.

In der einfachsten Variante wird das Fahrzeug 1 wie zuvor beschrieben in wenigstens zwei Lagen, z. B. in einer Anfangslage A und in einer Endlage E, angehalten und die Positionen der Geometriedetails werden in diesen beiden Lagen des Fahrzeugs 1 bestimmt. Eine zusätzliche zeitliche Synchronisation der Bildaufnahmezeitpunkte ist dann nicht erforderlich. Das Fahrzeug 1 kann auch in weiteren Lagen angehalten werden, um die Positionen der Geometriedetails in diesen Lagen zu bestimmen und die Genauigkeit der Messung zu erhöhen.

In einem alternativen Ausführungsbeispiel wird die Messung mit synchronisiertren Bildaufnahmevorrichtungen durchgeführt, ohne das Fahrzeug 1 in wenigstens zwei Lagen anzuhalten. Dazu wird das Fahrzeug 1 mit konstanter oder nicht konstanter Geschwindigkeit an den Messköpfen 2, 4, 14, 16 vorbei bewegt. Dabei werden die Positionen der Geometriedetails durch bekannte Verfahren der Bildverarbeitung wie z.B. KLT-Tracker, Korrelationsverfahren oder eine Zuordnung der Bewegungsbahn im Bild über eine während der Bewegung aufgenommene Bildfolge verfolgt bzw. "getrackt". Werden Messtargets verwendet, so können diese kodiert sein, um das Verfolgen der Messtargets während der Bewegung zu vereinfachen.

In einem weiteren alternativen Ausführungsbeispiel wird die Messung mit nicht synchronisiertren Bildaufnahmevorrichtungen durchgeführt, ohne das Fahrzeug 1 in wenigstens zwei Lagen anzuhalten. Dazu wird das Fahrzeug 1 mit nicht konstanter Geschwindigkeit an den Messköpfen 2, 4, 14, 16 vorbei bewegt. Dabei werden die Positionen der Geometriedetails durch bekannte Verfahren der Bildverarbeitung wie z.B. KLT-Tracker, Korrelationsverfahren oder eine Zuordnung der Bewegungsbahn im Bild über eine während der Bewegung aufgenommene Bildfolge verfolgt bzw. "getrackt". Werden Messtargets verwendet, so können diese kodiert sein, um das Verfolgen der Messtargets während der Bewegung zu vereinfachen. Die Synchronisation erfolgt durch den Abgleich der Bewegungsprofile.

Aus den Messdaten jeder Bildaufnahmevorrichtung 22, 24, 26, 28 wird für jeden der Messköpfe 2, 4, 14, 16 jeweils ein Bewegungsprofil erzeugt. Da das Fahrzeug 1 für diese Messung als starrer Körper anzusehen ist, muss die Beschleunigung bzw. Verzögerung für alle erfassten Geometriedetails zu jedem Zeitpunkt gleich sein. Die zeitliche Synchronisation wird dadurch hergestellt, dass die Bewegungsprofile der von den einzelnen Messköpfen 2, 4, 14, 16 erfassten Geometriedetails zur Deckung gebracht werden, so dass zu jedem Zeitpunkt die Beschleunigung bzw. Verzögerung für alle erfassten Geometriedetails die gleiche ist.

Die alternativen Ausführungsbeispiele ermöglichen eine schnelle Fahrwerksvermessung, da es ausreicht, mit dem Fahrzeug 1 an den Messköpfen 2, 4, 14, 16 vorbei zu fahren, ohne das Fahrzeug 1 anzuhalten.

Aus den gemessenen Daten können mittels bekannten Verfahren die Drehachse und das Drehzentrum der Räder 6, 8, 10, 12 im Koordinatensystem des jeweiligen Messkopfes 2, 4, 14, 16 bestimmt werden.

Diese Auswertung kann radweise, d.h. getrennt für alle vier Räder 6, 8, 10, 12, achsweise, d.h. gemeinsame für die gegenüberliegenden Räder 6, 8, 10, 12 einer Achse 32, 34, oder gemeinsam für alle Räder 6, 8, 10, 12 erfolgen. Für die achsweise Auswertung und die gemeinsame Auswertung aller Räder 6, 8, 10, 12 muss eine zeitliche Synchronität der Aufnahmen hergestellt werden.

Zusätzlich zu den Geometriedetails der Räder 6, 8, 10, 12 können Geometriedetails auf der Karosserie des Fahrzeugs 1 erfasst werden, um Lenk- und Federbewegungen des Fahrzeugs 1 zu erfassen und mathematisch zu kompensieren.

Wie beschrieben sind die 3D-Koordinaten jedes Meßkopfes nur bis auf einen Maßstabsfaktor bestimmbar, d.h. die Form der rekonstruierten 3D-Punktwolke ist bekannt, nicht jedoch ihre Größe (siehe Fig. 2). Ein gemeinsamer Maßstab wird aus dem Abgleich der Translationsvektoren t₁, t₂, t₃ und t₄ erhalten, welche die Bewegung der Geometriedetails im Raum beschreiben.

Aus Figur 2 ist jedoch erkennbar, dass die Skalierung auf einen gemeinsamen Maßstab zu keiner Änderung der Winkel zwischen den Strecken führt. Daher sind diese Winkel, wie z. B. der Sturz der Räder 6, 8, 10, 12, die Einzelspur der Vorderachse 32 sowie die Gesamtspur der Vorder- und Hinterachse 32, 34 unabhängig vom globalen Maßstab und damit ohne Kenntnis des gemeinsamen Maßstabs bestimmbar.

Messgrößen, die Streckenlängen erfordern, hängen dagegen vom gemeinsamen, absoluten Maßstab ab. Dies betrifft z. B. die Berechnung des Radstandes und der Spurweite oder der Fahrzeuglängsmittelebene M, die für die Berechnung der Einzelspur der Hinterachse benötigt wird.

Die Kenntnis des gemeinsamen, absoluten Maßstabs ist jedoch zur Berechnung der Einzelspur der Hinterachse 34 nicht erforderlich, wenn die Messköpfe 2, 4, 14, 16 mit den Bildaufnahmevorrichtungen 22, 24, 26, 28 exakt symmetrisch auf beiden Seiten des Fahrzeugs 1 angeordnet sind und die Bewegung des Fahrzeugs 1 exakt gradlinig durch die Messköpfe 2, 4, 14, 16 erfolgt. Somit kann durch eine symmetrische Positionierung der Messköpfe 2, 4, 14, 16 bzw. durch eine symmetrische Ausrichtung des Fahrzeugs 1 zwischen den fest montierten Messköpfen 2, 4, 14, 16 eine exakte Bestimmung der Längsmittelebene M des Fahrzeugs 1 erfolgen und damit die Einzelspur der Hinterräder 10, 12 exakt bestimmt werden.

Wie in Figur 3 gezeigt, ist unter realen Bedingungen eine solche symmetrische Anordnung der Messköpfe 2, 4, 14, 16 und des Fahrzeugs 1 und eine exakt parallele und mittige Bewegung des Fahrzeugs 1 zwischen den Messköpfen 2, 4, 14, 16 nur näherungsweise realisierbar. Die Abweichung von der Symmetrieachse S entspricht einer Schrägfahrt um den Winkel α. Durch die Schrägfahrt α entsteht bei der Bestimmung der Längsmittelebene M ein Messfehler β.

Dieser Messfehler β kann durch das Einbringen eines absoluten Maßstabes verringert werden.

Häufig ist ein näherungsweise bekannter Maßstab ausreichend, um die gewünschte Genauigkeit der Achsvermessung zu erreichen. Durch das Einführen eines zumindest näherungsweise bekannten Maßstabes kann die Abweichung der Längsmittelebene M' des Fahrzeugs 1 von der tatsächlichen Längsmittelebene M des Messplatzes hinreichend gering gehalten werden. Der verbleibende Fehler kann anhand einer Fehlerformel (Winkelfehler β der Längsmittelebene = Maßstabsfehler x Winkel der Schrägfahrt α) abgeschätzt werden. So beträgt bei einem Maßstabfehler von 1% und einer Abweichung der Längsorientierung des Fahrzeugs 1 von der Symmetrieachse S des Messplatzes von 3° der Winkelfehler β weniger als zwei Winkelminuten, was für viele Anwendungen ausreichend ist.

Der näherungsweise bekannte Maßstab bietet auch die Möglichkeit, die Schrägfahrt zu überwachen. Wird ein vorgegebener maximaler Schrägfahrwinkel überschritten, kann die Messung abgebrochen und der Anwender aufgefordert werden, die Fahrtrichtung bzw. die Position des Fahrzeugs 1 zu korrigieren und die Messung zu wiederholen.

Für das Einbringen eines genähert bekannten Maßstabes existieren verschiedene Möglichkeiten.

So können auf den Rädern 6, 8, 10, 12, auf an den Rädern 6, 8, 10, 12 befestigten Radadaptern oder auf der Karosserie des Fahrzeugs 1 Messtargets in einem bekannten Abstand angebracht werden. Radadapter haben einen Durchmesser von etwa 500 mm und verwenden meist Klebemarken. Auch bei manueller Platzierung der Messtargets kann eine Genauigkeit von etwa 1 % erreicht werden.

Alternativ kann die zurückgelegte Distanz des Fahrzeugs 1 während der Bewegung von der Anfangslage A in die Endlage E in einem absoluten Maß bestimmt werden. Dazu können in dem Fahrzeug 1 vorhandene Sensoren, wie sie z.B. für ABS und EPS benutzt werden, oder eine an dem Messplatz fest installierte metrisch bekannte Information verwendet werden.

In einem anderen Ausführungsbeispiel wird die Geschwindigkeit des Fahrzeugs 1 während der Bewegung durch Geschwindigkeitssensoren gemessen und der zurückgelegte Weg durch Integration der gemessenen Geschwindigkeit über die Zeit bestimmt. Die Geschwindigkeitssensoren können in dem Fahrzeug 1 vorhandene Geschwindigkeitssensoren, z. B. zur Ansteuerung eines Tachometers sein.

## Patentansprüche

1. Verfahren zur Fahrwerksvermessung mit den folgenden Schritten:
Bereitstellen eines Fahrwerksvermessungssystems mit vier in bekannter Position zueinander angeordneten Messköpfen (2, 4, 14, 16), von denen jeder eine monokulare Bildaufnahmevorrichtung (22, 24, 26, 28) aufweist;
Erfassen von mindestens drei Geometriedetails jeweils eines Rades (6, 8, 10, 12) eines in einer Anfangslage (A) stehenden Fahrzeugs (1) mit jedem der vier Messköpfe (2, 4, 14, 16);
Ausführen einer Relativbewegung zwischen dem Fahrzeug (1) einerseits und den Messköpfen (2, 4) andererseits von der Anfangslage (A) in mindestens eine weitere Lage (E), wobei die relative Position der Messköpfe (2, 4, 14, 16) zueinander bekannt ist;
Erfassen der mindestens drei Geometriedetails jeweils eines Rades (6, 8, 10, 12) des in der weiteren Lage (E) stehenden Fahrzeugs (1) mit jedem der vier Messköpfe (2, 4, 14, 16);
Bestimmung der 3D-Koordinaten der Geometriedetails im lokalen Koordinatensystem des jeweiligen Messköpfes (2, 4, 14, 16), der Tranlationsvektoren (t₁, t₂, t₃, t₄) und der Rotatiosnvektoren (R₁, R₂, R₃, R₄) der Räder (6, 8, 10, 12) aus den Positionen der Geometriedetails in der Anfangslage (A) und der Endlage (E) und aus der Formulierung einer dreidimensionalen Bewegung eines starren Körpers zwischen den zwei Lagen unter Einführung der Drehzentren, der Drehachsen und der Drehwinkel der Räder;
Bestimmen eines globalen Maßstabs für die Messköpfe durch Skalieren der Translationsvektoren (t₁, t₂, t₃, t₄) der Räder (6, 8, 10, 12), so dass die Translationsvektoren (t₁, t₂, t₃, t₄) die gleiche Länge haben; und Bestimmen von Sturz, Einzel- und/oder Gesamtspur des Fahrzeugs (1).

2. Verfahren zur Fahrwerksvermessung mit den folgenden Schritten:
Bereitstellen eines Fahrwerksvermessungssystems mit vier in bekannter Position zueinander angeordneten Messköpfen (2, 4, 14, 16), von denen jeder eine monokulare Bildaufnahmevorrichtung (22, 24, 26, 28) aufweist, wobei die Bildaufname der Messköpfe zeitlich synchronisiert erfolgt;
Ausführen einer Relativbewegung zwischen einem Fahrzeug (1) einerseits und den Messköpfen (2, 4, 14, 16) andererseits mit konstanter oder nicht konstanter Geschwindigkeit, wobei die relative Position der Messköpfe (2, 4, 14, 16) zueinander bekannt ist;
Erfassen von mindestens drei Geometriedetails jeweils eines Rades (6, 8, 10, 12) des Fahrzeugs (1) während der Ausführung der Relativbewegung mit jedem der vier zueinander zeitlich synchronisierten Messköpfe (2, 4, 14, 16) in mindestens zwei Lagen (A, E) des Fahrzeugs (1);
Bestimmung der 3D-Koordinaten der Geometriedetails im lokalen Koordinatensystem des jeweiligen Messköpfes (2, 4, 14, 16), der Tranlationsvektoren (t₁, t₂, t₃, t₄) und der Rotatiosnvektoren (R₁, R₂, R₃, R₄) der Räder (6, 8, 10, 12) aus den Positionen der Geometriedetails in zwei Lagen (A, E) und aus der Formulierung einer dreidimensionalen Bewegung eines starren Körpers zwischen den zwei Lagen unter Einführung der Drehzentren, der Drehachsen und der Drehwinkel der Räder;
Bestimmen eines gemeinsamen, globalen Maßstabs für die Messköpfe (2, 4, 14, 16) durch Skalieren der Translationsvektoren (t₁, t₂, t₃, t₄) der Räder (6, 8, 10, 12), so dass die Translationsvektoren (t₁, t₂, t₃, t₄) die gleiche Länge haben; und Bestimmen von Sturz, Einzel- und/oder Gesamtspur des Fahrzeugs (1).

3. Verfahren zur Fahrwerksvermessung mit den folgenden Schritten:
Bereitstellen eines Fahrwerksvermessungssystems mit vier in bekannter Position zueinander angeordneten Messköpfen (2, 4, 14, 16), von denen jeder eine monokulare Bildaufnahmevorrichtung (22, 24, 26, 28) aufweist;
Ausführen einer Relativbewegung zwischen einem Fahrzeug (1) einerseits und den Messköpfen (2, 4, 14, 16) andererseits mit nicht konstanter Geschwindigkeit, wobei die relative Position der Messköpfe (2, 4, 14, 16) zueinander bekannt ist;
Erfassen von mindestens drei Geometriedetails jeweils eines Rades (6, 8, 10, 12) des Fahrzeugs (1) während der Ausführung der Relativbewegung mit jedem der vier zueinander synchronisierten Messköpfe (2, 4, 14, 16) in mehreren Lagen (A, E) des Fahrzeugs (1);
Bestimmung der 3D-Koordinaten der Geometriedetails im lokalen Koordinatensystem des jeweiligen Messköpfes (2, 4, 14, 16), der Tranlationsvektoren (t₁, t₂, t₃, t₄) und der Rotatiosnvektoren (R₁, R₂, R₃, R₄) der Räder (6, 8, 10, 12) aus den Positionen der Geometriedetails in zwei Lagen (A, E) und aus der Formulierung einer dreidimensionalen Bewegung eines starren Körpers zwischen den zwei Lagen unter Einführung der Drehzentren, der Drehachsen und der Drehwinkel der Räder;
Bestimmen der Bewegungsprofile der Räder (6, 8, 10, 12) aus den erfassten Bewegungen der Geometriedetails;
Synchronisieren der Bewegungsprofile der Räder (6, 8, 10, 12) durch Abgleich der Bewegungsprofile bezüglich Lage, Form und Maßstab; und
Bestimmen von Sturz, Einzel- und/oder Gesamtspur des Fahrzeugs (1).

4. Verfahren nach einem der Ansprüche 1 bis 3, wobei jeweils zwei der Messköpfe (2, 4, 14, 16) so angeordnet sind, dass sie einander symmetrisch auf beiden Seiten des Fahrzeuges (1) gegenüber liegen, das Fahrzeug (1) parallel zur Symmetrieachse zwischen den gegenüberliegenden Messköpfen (2, 4, 14, 16) hindurch bewegt wird und zusätzlich die Einzelspur der Hinterräder (10, 12) des Fahrzeugs (1) bestimmt wird.

5. Verfahren nach einem der Ansprüche 1 bis 4, wobei von wenigstens einem der Messköpfe (2, 4, 14, 16) zusätzlich eine metrisch bekannte Information erfasst wird, um den Maßstabsfaktor absolut zu bestimmen, und zusätzlich der Radstand und die Spurweite des Fahrzeugs (1) bestimmt werden.

6. Verfahren nach Anspruch 5, wobei die metrisch bekannte Information eine Distanz zwischen zwei Merkmalen auf dem Fahrzeug (1) ist.

7. Verfahren nach Anspruch 5, wobei die metrisch bekannte Information die durch das Fahrzeug (1) zurückgelegte Distanz ist.

8. Verfahren nach Anspruch 7, wobei die Geschwindigkeit des Fahrzeugs (1) durch Geschwindigkeitssensoren bestimmt und die zurückgelegte Distanz durch Integration der Geschwindigkeit bestimmt wird.

9. Vorrichtung zum Vermessen der Fahrwerksgeometrie eines Fahrzeugs (1), aufweisend:
eine Anordnung von vier in bekannter Position zueinander angeordneten Messköpfen (2, 4, 14, 16), von denen jeder eine monokulare Bildaufnahmevorrichtung (22, 24, 26, 28) aufweist und eingerichtet ist, im Betrieb mit der Bildaufnahmevorrichtung (22, 24, 26, 28) jeweils wenigstens drei Geometriedetails jeweils eines Rades (6, 8, 10, 12) des in einer Ausgangslage (A) und einer weiteren Lage (E) stehenden Fahrzeugs (1) zu erfassen;
eine Auswerteinrichtung (18), die eingerichtet ist, im Betrieb aus der Bewegung der erfassten Geometriedetails in der Anfangslage (A) und der Endlage (E) und aus der Formulierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes (2, 4, 14, 16), die Tranlationsvektoren (t₁, t₂, t₃, t₄) und die Rotatiosnvektoren (R₁, R₂, R₃, R₄) der Räder (6, 8, 10, 12) zu bestimmen, und
durch Skalieren der Translationsvektoren (t₁, t₂, t₃, t₄) der Räder (6, 8, 10, 12) einen globalen Maßstab so zu bestimmen, dass die Translationsvektoren (t₁, t₂, t₃, t₄) die gleiche Länge haben, und
den Sturz, Einzel- und/oder die Gesamtspur des Fahrzeugs (1) zu bestimmen.

10. Vorrichtung zum Vermessen der Fahrwerksgeometrie eines Fahrzeugs (1), aufweisend:
eine Anordnung von vier in bekannter Position zueinander angeordneten Messköpfen (2, 4, 14, 16), von denen jeder eine monokulare Bildaufnahmevorrichtung (22, 24, 26, 28) aufweist und eingerichtet ist, dass die Bildaufnahme der Messköpfe zeitlich synchronisiert erfolgt und mit der Bildaufnahmevorrichtung (22, 24, 26, 28) im Betrieb jeweils wenigstens drei Geometriedetails jeweils eines Rades (6, 8, 10, 12) des Fahrzeugs (1) während der Ausführung einer Bewegung des Fahrzeugs (1) mit konstanter oder nicht konstanter Geschwindigkeit relativ zu den Messköpfen (2, 4, 14, 16) zu erfassen, und
eine Auswerteinrichtung (18), die eingerichtet ist, im Betrieb aus der Bewegung der erfassten Geometriedetails in zwei Lagen (A, E) und aus der Formierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes (2, 4, 14, 16), die Tranlationsvektoren (t₁, t₂, t₃, t₄) und die Rotatiosnvektoren (R₁, R₂, R₃, R₄) der Räder (6, 8, 10, 12) zu bestimmen,
durch Skalieren der Translationsvektoren (t₁, t₂, t₃, t₄) der Räder (6, 8, 10, 12) einen gemeinsamen globalen Maßstabsfaktor so zu bestimmen, dass die Translationsvektoren (t₁, t₂, t₃, t₄) die gleiche Länge haben, und
den Sturz, Einzel- und/oder die Gesamtspur des Fahrzeugs zu bestimmen.

11. Vorrichtung zum Vermessen der Fahrwerksgeometrie eines Fahrzeugs (1), aufweisend:
eine Anordnung von vier in bekannter Position zueinander angeordneten Messköpfen (2, 4, 14, 16), von denen jeder eine monokulare Bildaufnahmevorrichtung (22, 24, 26, 28) aufweist und eingerichtet ist, im Betrieb mit der Bildaufnahmevorrichtung (22, 24, 26, 28) jeweils wenigstens drei Geometriedetails jeweils eines Rades (6, 8, 10, 12) des Fahrzeugs (1) während der Ausführung einer Bewegung des Fahrzeugs (1) mit nicht konstanter Geschwindigkeit relativ zu den Messköpfen (2, 4, 14, 16) zu erfassen, und
eine Auswerteinrichtung (18), die eingerichtet ist, im Betrieb aus der Bewegung der erfassten Geometriedetails in zwei Lagen (A, E) und aus der Formulierung einer dreidimensionalen Bewegung eines starren Körpers zwischen den zwei Lagen unter Einführung der Drehzentren, der Drehachsen und der Drehwinkel der Räder, die 3D-Koordinaten der Geometriedetails im lokalen Koordinatensystem des jeweiligen Messköpfes (2, 4, 14, 16), die Tranlationsvektoren (t₁, t₂, t₃, t₄) und die Rotatiosnvektoren (R₁, R₂, R₃, R₄) der Räder (6, 8, 10, 12) zu bestimmen,
aus der Bewegung der erfassten Geometriedetails die Translationsvektoren (t₁, t₂, t₃, t₄) und die Rotationsvektoren (R₁, R₂, R₃, R₄) der Räder (6, 8, 10, 12) zu bestimmen, die Bewegungsprofile der Räder (6, 8, 10, 12) durch Anpassen der Bewegungsprofile in Lage, Form und Maßstab zu synchronisieren, und
den Sturz, Einzel- und/oder die Gesamtspur des Fahrzeugs (1) zu bestimmen.

## Claims

1. Method for measuring a chassis, comprising the following steps:
providing a chassis measuring system having four measuring heads (2, 4, 14, 16) arranged in known positions with respect to one another, of which each has a monocular image recording apparatus (22, 24, 26, 28);
capturing at least three geometry details of in each case one wheel (6, 8, 10, 12) of a vehicle (1) disposed in a starting position (A) with each of the four measuring heads (2, 4, 14, 16);
effecting a relative movement between the vehicle (1) and the measuring heads (2, 4) from the starting position (A) into at least one further position (E), wherein the relative position of the measuring heads (2, 4, 14, 16) with respect to one another is known;
capturing the at least three geometry details of in each case one wheel (6, 8, 10, 12) of the vehicle (1) disposed in the further position (E) with each of the four measuring heads (2, 4, 14, 16);
determining the 3D coordinates of the geometry details in the local coordinate system of the respective measuring head (2, 4, 14, 16), the translation vectors (t₁, t₂, t₃, t₄) and the rotation vectors (R₁, R₂, R₃, R₄) of the wheels (6, 8, 10, 12) from the positions of the geometry details in the starting position (A) and the end position (E) and from the formulation of a three-dimensional movement of a rigid body between the two positions with introduction of the rotation centres, the rotation axes and the rotation angles of the wheels;
determining a global scale for the measuring heads by scaling the translation vectors (t1, t2, t3, t4) of the wheels (6, 8, 10, 12) such that the translation vectors (t1, t2, t3, t4) have the same length; and
determining camber, single and/or total track of the vehicle (1).

2. Method for measuring a chassis, comprising the following steps:
providing a chassis measuring system having four measuring heads (2, 4, 14, 16) arranged in known positions with respect to one another, of which each has a monocular image recording apparatus (22, 24, 26, 28), wherein the image recording of the measuring heads takes place in time-synchronized fashion;
effecting a relative movement between a vehicle (1) and the measuring heads (2, 4, 14, 16) at a constant or non-constant speed, wherein the relative position of the measuring heads (2, 4, 14, 16) with respect to one another is known;
capturing at least three geometry details of in each case one wheel (6, 8, 10, 12) of the vehicle (1) during the effecting of the relative movement with each of the four measuring heads (2, 4, 14, 16) which are time-synchronized with respect to one another in at least two positions (A, E) of the vehicle (1);
determining the 3D coordinates of the geometry details in the local coordinate system of the respective measuring head (2, 4, 14, 16), the translation vectors (t1, t2, t3, t4) and the rotation vectors (R₁, R₂, R₃, R₄) of the wheels (6, 8, 10, 12) from the positions of the geometry details in two positions (A, E) and from the formulation of a three-dimensional movement of a rigid body between the two positions with introduction of the rotation centres, the rotation axes and the rotation angles of the wheels;
determining a common, global scale for the measuring heads (2, 4, 14, 16) by scaling the translation vectors (t1, t2, t3, t4) of the wheels (6, 8, 10, 12) such that the translation vectors (t1, t2, t3, t4) have the same length; and
determining camber, single and/or total track of the vehicle (1).

3. Method for measuring a chassis, comprising the following steps:
providing a chassis measuring system having four measuring heads (2, 4, 14, 16) arranged in known positions with respect to one another, of which each has a monocular image recording apparatus (22, 24, 26, 28) ;
effecting a relative movement between a vehicle (1) and the measuring heads (2, 4, 14, 16) at a non-constant speed, wherein the relative position of the measuring heads (2, 4, 14, 16) with respect to one another is known;
capturing at least three geometry details of in each case one wheel (6, 8, 10, 12) of the vehicle (1) during the effecting of the relative movement with each of the four measuring heads (2, 4, 14, 16) which are synchronized with respect to one another in a plurality of positions (A, E) of the vehicle (1);
determining the 3D coordinates of the geometry details in the local coordinate system of the respective measuring head (2, 4, 14, 16), the translation vectors (t1, t2, t3, t4) and the rotation vectors (R₁, R₂, R₃, R₄) of the wheels (6, 8, 10, 12) from the positions of the geometry details in two positions (A, E) and from the formulation of a three-dimensional movement of a rigid body between the two positions with introduction of the rotation centres, the rotation axes and the rotation angles of the wheels;
determining the movement profiles of the wheels (6, 8, 10, 12) from the captured movements of the geometry details;
synchronizing the movement profiles of the wheels (6, 8, 10, 12) by matching of the movement profiles with respect to position, form and scale; and
determining camber, single and/or total track of the vehicle (1).

4. Method according to one of Claims 1 to 3, wherein in each case two of the measuring heads (2, 4, 14, 16) are arranged such that they are located symmetrically opposite one another on both sides of the vehicle (1), the vehicle (1) is moved parallel to the axis of symmetry through between the opposite measuring heads (2, 4, 14, 16), and additionally the single track of the rear wheels (10, 12) of the vehicle (1) is determined.

5. Method according to one of Claims 1 to 4, wherein additionally one metrically known information item is captured by at least one of the measuring heads (2, 4, 14, 16) in order to absolutely determine the scale factor, and additionally the wheel base and the track width of the vehicle (1) are determined.

6. Method according to Claim 5, wherein the metrically known information item is a distance between two features on the vehicle (1).

7. Method according to Claim 5, wherein the metrically known information item is the distance travelled by the vehicle (1).

8. Method according to Claim 7, wherein the speed of the vehicle (1) is determined by speed sensors and the travelled distance is determined by integrating the speed.

9. Apparatus for measuring the chassis geometry of a vehicle (1), including:
an arrangement of four measuring heads (2, 4, 14, 16) arranged in known positions with respect to one another, of which each has a monocular image recording apparatus (22, 24, 26, 28) and is adapted to capture, during operation, in each case at least three geometry details of in each case one wheel (6, 8, 10, 12) of the vehicle (1) disposed in a starting position (A) and a further position (E) using the image recording apparatus (22, 24, 26, 28);
an evaluation device (18), which is adapted to, during operation, determine the 3D coordinates of the geometry details in the local coordinate system of the respective measuring head (2, 4, 14, 16), the translation vectors (t1, t2, t3, t4) and the rotation vectors (R₁, R₂, R₃, R₄) of the wheels (6, 8, 10, 12) from the movement of the captured geometry details in the starting position (A) and the end position (E) and from the formulation of a three-dimensional movement of a rigid body between the two positions with introduction of the rotation centres, the rotation axes and the rotation angles of the wheels, and
determine, through scaling of the translation vectors (t1, t2, t3, t4) of the wheels (6, 8, 10, 12), a global scale such that the translation vectors (t1, t2, t3, t4) have the same length, and
determine the camber, single and/or the total track of the vehicle (1).

10. Apparatus for measuring the chassis geometry of a vehicle (1), including:
an arrangement of four measuring heads (2, 4, 14, 16) arranged in known positions with respect to one another, of which each has a monocular image recording apparatus (22, 24, 26, 28) and is adapted such that the image recording of the measuring heads takes place in time-synchronized fashion and, in operation, to capture in each case at least three geometry details of in each case one wheel (6, 8, 10, 12) of the vehicle (1) using the image recording apparatus (22, 24, 26, 28) during the effecting of a movement of the vehicle (1) at constant or non-constant speed relative to the measuring heads (2, 4, 14, 16), and
an evaluation device (18), which is adapted to, during operation,
determine the 3D coordinates of the geometry details in the local coordinate system of the respective measuring head (2, 4, 14, 16), the translation vectors (t1, t2, t3, t4) and the rotation vectors (R₁, R₂, R₃, R₄) of the wheels (6, 8, 10, 12) from the movement of the captured geometry details in two positions (A, E) and from the formulation of a three-dimensional movement of a rigid body between the two positions with introduction of the rotation centres, the rotation axes and the rotation angles of the wheels, and
determine, through scaling of the translation vectors (t1, t2, t3, t4) of the wheels (6, 8, 10, 12), a common, global scale factor such that the translation vectors (t1, t2, t3, t4) have the same length, and
determine the camber, single and/or the total track of the vehicle (1).

11. Apparatus for measuring the chassis geometry of a vehicle (1), including:
an arrangement of four measuring heads (2, 4, 14, 16) arranged in known positions with respect to one another, of which each has a monocular image recording apparatus (22, 24, 26, 28) and is adapted to, in operation, capture in each case at least three geometry details of in each case one wheel (6, 8, 10, 12) of the vehicle (1) during the effecting of a movement of the vehicle (1) at non-constant speed relative to the measuring heads (2, 4, 14, 16), and
an evaluation device (18), which is adapted to, during operation,
determine the 3D coordinates of the geometry details in the local coordinate system of the respective measuring head (2, 4, 14, 16), the translation vectors (t1, t2, t3, t4) and the rotation vectors (R₁, R₂, R₃, R₄) of the wheels (6, 8, 10, 12) from the movement of the captured geometry details in two positions (A, E) and from the formulation of a three-dimensional movement of a rigid body between the two positions with introduction of the rotation centres, the rotation axes and the rotation angles of the wheels,
determine from the movement of the captured geometry details the translation vectors (t1, t2, t3, t4) and the rotation vectors (R₁, R₂, R₃, R₄) of the wheels (6, 8, 10, 12),
synchronize the movement profiles of the wheels (6, 8, 10, 12) by matching the movement profiles in terms of position, form and scale, and
determine the camber, single and/or the total track of the vehicle (1).

## Revendications

1. Procédé de mesure de géométrie de véhicule comportant les étapes suivantes :
fourniture d'un système de mesure de géométrie de véhicule avec quatre têtes de mesure (2, 4, 14, 16) disposées dans une position connue les unes par rapport aux autres, chacune desquelles présente un dispositif de capture d'image monoculaire (22, 24, 26, 28) ;
détection d'au moins trois détails de géométrie d'une roue respective (6, 8, 10, 12) d' un véhicule (1) se trouvant dans une position de départ (A) avec chacune des quatre têtes de mesure (2, 4, 14, 16) ;
exécution d'un mouvement relatif entre le véhicule (1) d'un côté et les têtes de mesure (2, 4) d'un autre côté à partir de la position de départ (A) dans au moins une autre position (E), dans lequel la position relative des têtes de mesure (2, 4, 14, 16) les unes par rapport aux autres est connue ;
détection d'au moins trois détails de géométrie d'une roue respective (6, 8, 10, 12) d' un véhicule (1) se trouvant dans l'autre position (E) avec chacune des quatre têtes de mesure (2, 4, 14, 16) ;
détermination des coordonnées 3D du détail de géométrie dans le système de coordonnées locales de la tête de mesure respective (2, 4, 14, 16), des vecteurs de translation (t₁, t₂, t₃, t₄) et des vecteurs de rotation (R₁, R₂, R₃, R₄) des roues (6, 8, 10, 12) d'après les positions du détail de géométrie dans la position de départ (A) et la position finale (E) et d'après la formulation d'un mouvement en trois dimensions d'un corps rigide entre les deux positions en incluant les centres de rotation, les axes de rotation et l'angle de rotation des roues ;
détermination d'une échelle globale pour les têtes de mesure par mise à l'échelle des vecteurs de translation (t₁, t₂, t₃, t₄) des roues (6, 8, 10, 12), de sorte que les vecteurs de translation (t₁, t₂, t₃, t₄) aient la même longueur ; et
détermination du carrossage, du parallélisme individuel et du parallélisme total du véhicule (1) .

2. Procédé de mesure de géométrie de véhicule comportant les étapes suivantes :
fourniture d'un système de mesure de géométrie de véhicule avec quatre têtes de mesure disposées dans une position connue les unes par rapport aux autres (2, 4, 14, 16), chacune desquelles présente un dispositif de capture d'image monoculaire (22, 24, 26, 28), dans lequel la capture d'image des têtes de mesure se fait de manière synchronisée temporellement ;
exécution d'un mouvement relatif entre un véhicule (1) d'un côté et les têtes de mesure (2, 4, 14, 16) d'un autre côté avec une vitesse constante ou non constante, dans lequel la position relative des têtes de mesure (2, 4, 14, 16) les unes par rapport aux autres est connue ;
détection d'au moins trois détails de géométrie relatifs à une roue (6, 8, 10, 12) du véhicule (1) pendant l'exécution du mouvement relatif avec chacune des quatre têtes de mesures (2, 4, 14, 16) synchronisées temporellement les unes par rapport aux autres dans au moins deux positions (A, E) du véhicule (1) ;
détermination des coordonnées 3D du détail de géométrie dans le système de coordonnées locales de la tête de mesure respective (2, 4, 14, 16) des vecteurs de translation (t₁, t₂, t₃, t₄) et des vecteurs de rotation (R₁, R₂, R₃, R₄) des roues (6, 8, 10, 12) d'après les positions du détail de géométrie dans deux positions (A, E) et d'après l'formulation d'un mouvement en trois dimensions d'un corps rigide entre les deux positions en incluant les centres de rotation, les axes de rotation et l'angle de rotation des roues ;
détermination d'une échelle globale commune pour les têtes de mesure (2, 4, 14, 16) par mise à l'échelle des vecteurs de translation (t₁, t₂, t₃, t₄) des roues (6, 8, 10, 12), de sorte que les vecteurs de translation (t₁, t₂, t₃, t₄) aient la même longueur ; et
détermination du carrossage, du parallélisme individuel et/ou du parallélisme total du véhicule (1) .

3. Procédé de mesure de géométrie de véhicule comportant les étapes suivantes :
fourniture d'un système de mesure de géométrie de véhicule avec quatre têtes de mesure (2, 4, 14, 16) disposées dans une position connue les une par rapport aux autres, chacune desquelles présente un dispositif de capture d'image monoculaire (22, 24, 26, 28) ;
exécution d'un mouvement relatif entre un véhicule (1) d'un côté et les têtes de mesure (2, 4, 14, 16) d'un autre côté avec une vitesse non constante, dans lequel la position relative des têtes de mesure (2, 4, 14, 16) les unes par rapport aux autres est connue ;
détection d'au moins trois détails de géométrie d'une roue respective (6, 8, 10, 12) du véhicule (1) pendant l'exécution du mouvement relatif avec chacune des quatre têtes de mesure (2, 4, 14, 16) synchronisées les unes par rapport aux autres dans plusieurs positions (A, E) du véhicule (1) ;
détermination des coordonnées 3D du détail de géométrie dans le système de coordonnées locales de la tête de mesure respective (2, 4, 14, 16), des vecteurs de translation (t₁, t₂, t₃, t₄) et des vecteurs de rotation (R₁, R₂, R₃, R₄) des roues (6, 8, 10, 12) d'après les positions du détail de géométrie dans deux positions (A, E) et d'après la formulation d'un mouvement en trois dimensions d'un corps rigide entre les deux positions en incluant les centres de rotation, les axes de rotation et l'angle de rotation des roues ;
détermination du profil de mouvement des roues (6, 8, 10, 12) d'après les mouvements détectés du détail de géométrie ;
synchronisation des profils de mouvement des roues (6, 8, 10, 12) par adéquation des profils de mouvement en ce qui concerne la position, la forme et l'échelle ; et
détermination du carrossage, du parallélisme individuel et du parallélisme total du véhicule (1) .

4. Procédé selon une des revendications 1 à 3, dans lequel respectivement deux des têtes de mesure (2, 4, 14, 16) sont disposées de sorte qu'elles viennent reposer symétriquement l'une par rapport à l'autre sur les deux côtés du véhicule (1), le véhicule (1) est déplacé parallèlement à l'axe de symétrie entre les deux têtes de mesure opposées (2, 4, 14, 16) et le parallélisme individuel des roues arrières (10, 12) du véhicule (1) est en outre déterminé.

5. Procédé selon une des revendications 1 à 4, dans lequel une information métrique connue est en outre détectée d'après au moins une des têtes de mesure (2, 4, 14, 16), pour déterminer de manière absolue le facteur d'échelle et l'empattement et l'écartement des voies du véhicule (1) sont en outre déterminés.

6. Procédé selon la revendication 5, dans lequel l'information métrique connue est une distance entre deux caractéristiques sur le véhicule (1).

7. Procédé selon la revendication 5, dans lequel l'information métrique connue est la distance parcourue par le véhicule (1).

8. Procédé selon la revendication 7, dans lequel la vitesse du véhicule (1) est déterminée par des capteurs de vitesse et la distance parcourue est déterminée par intégration de la vitesse.

9. Dispositif de mesure de géométrie de véhicule d'un véhicule (1), présentant :
un dispositif de quatre têtes de mesure (2, 4, 14, 16) disposées dans une position connue les unes par rapport aux autres, chacune desquelles présente un dispositif de capture d'image monoculaire (22, 24, 26, 28) et est conçue pour détecter en fonctionnement avec le dispositif de capture d'image (22, 24, 26, 28) respectivement au moins trois détails de géométrie d'une roue respective (6, 8, 10, 12) du véhicule (1) se trouvant dans une position de départ (A) et dans une autre position (E) ;
un dispositif d'évaluation (18) qui est conçu pour déterminer en fonctionnement d'après le mouvement du détail de géométrie détecté dans la position de départ (A) et la position finale (E) et d'après la formulation d'un mouvement en trois dimensions d'un corps rigide entre les deux positions en incluant les centres de rotation, les axes de rotation et l'angle de rotation des roues, les coordonnées 3D du détail de géométrie dans le système de coordonnées locales de la tête de mesure respective (2, 4, 14, 16), les vecteurs de translation (t₁, t₂, t₃, t₄) et les vecteurs de rotation (R₁, R₂, R₃, R₄) des roues (6, 8, 10, 12), et
par mise à l'échelle des vecteurs de translation (t₁, t₂, t₃, t₄) des roues (6, 8, 10, 12), déterminer une mesure globale, de sorte que les vecteurs de translation (t₁, t₂, t₃, t₄) aient la même longueur, et
déterminer le carrossage, le parallélisme individuel et/ou le parallélisme total du véhicule (1) .

10. Dispositif de mesure de géométrie de véhicule d'un véhicule (1) présentant :
un dispositif de quatre têtes de mesure (2, 4, 14, 16) disposées dans une position connue les unes par rapport aux autres, chacune desquelles présente un dispositif de capture d'image monoculaire (22, 24, 26, 28) et est conçue de sorte que la capture d'image des têtes de mesure se fasse de manière synchronisée temporellement et le dispositif de capture d'image (22, 24, 26, 28) détecte en fonctionnement respectivement au moins trois détails de géométrie d'une roue respective (6, 8, 10, 12) du véhicule (1) pendant l'exécution d'un mouvement du véhicule (1) avec une vitesse constante ou non constante relativement aux têtes de mesure (2, 4, 14, 16), et
un dispositif d'évaluation (18), qui est conçu pour déterminer en fonctionnement d'après le mouvement du détail de géométrie détecté dans deux positions (A, E) et d'après la formulation d'un mouvement en trois dimensions d'un corps rigide entre les deux positions en incluant les centres de rotation, les axes de rotation et l'angle de rotation des roues, les coordonnées 3D du détail de géométrie dans le système de coordonnées locales de la tête de mesure respective (2, 4, 14, 16), les vecteurs de translation (t₁, t₂, t₃, t₄) et les vecteurs de rotation (R₁, R₂, R₃, R₄) des roues (6, 8, 10, 12),
déterminer par mise à l'échelle des vecteurs de translation (t₁, t₂, t₃, t₄) des roues (6, 8, 10, 12) un facteur d'échelle global commun, de sorte que les vecteurs de translation (t₁, t₂, t₃, t₄) aient la même longueur et
déterminer le carrossage, le parallélisme individuel et/ou le parallélisme total du véhicule (1) .

11. Dispositif de mesure de géométrie de véhicule d'un véhicule (1), présentant :
un dispositif de quatre têtes de mesure (2, 4; 14, 16) disposées dans une position connue les unes par rapport aux autres, chacune desquelles présente un dispositif de capture d'image monoculaire (22, 24, 26, 28) et est conçue en fonctionnement avec le dispositif de capture d'image (22, 24, 26, 28) pour détecter respectivement au moins trois détails de géométrie d'une roue respective (6, 8, 10, 12) du véhicule (1), pendant l'exécution d'un mouvement du véhicule (1) avec une vitesse constante par rapport aux têtes de mesure (2, 4, 14, 16) et
un dispositif d'évaluation (18), qui est conçu pour déterminer en fonctionnement d'après le mouvement du détail de géométrie détecté dans deux positions (A, E) et d'après la formulation d'un mouvement en trois dimensions d'un corps rigide entre les deux positions en incluant les centres de rotation, les axes de rotation et l'angle de rotation des roues, les coordonnées 3D du détail de géométrie dans le système de coordonnées locales de la tête de mesure respective (2, 4, 14, 16), les vecteurs de translation (t₁, t₂, t₃, t₄) et les vecteurs de rotation (R₁, R₂, R₃, R₄) des roues (6, 8, 10, 12),
déterminer d'après le mouvement du détail de géométrie détecté les vecteurs de translation (t₁, t₂, t₃, t₄) et les vecteurs de rotation (R₁, R₂, R₃, R₄) des roues (6, 8, 10, 12),
synchroniser les profils de mouvement des roues (6, 8, 10, 12) pour adapter les profils de mouvement en position, forme et échelle et
déterminer le carrossage, le parallélisme individuel et/ou le parallélisme total du véhicule (1) .
